# EUROPEAN PATENT SPECIFICATION

(11) **EP 2 207 854 B1**
(45) Date of publication and mention of the grant of the patent: **25.01.2012**
(21) Application number: 08841429.7
(22) Date of filing: 22.10.2008
(51) Int. Cl.: C09B 67/20, C09C 1/00, C09K 11/77, B42D 15/00, D21H 21/48

(54) **SECURITY ELEMENT**
SICHERHEITSELEMENT
ELEMENT DE SECURITE

(30) Priority: 26.10.2007 EP 07119389
(43) Date of publication of application: 21.07.2010
(73) Proprietor: BASF SE, 67056 Ludwigshafen (DE)
(72) Inventor: REICHERT, Hans, 79618 Rheinfelden (DE); HALL-GOULLE, Véronique, 4143 Dornach (CH); SODER, Sibylle, MÖHLIN 4313 (CH)
(86) International application number: PCT/EP2008/064290
(87) International publication number: WO 2009/053391

(56) References cited:
- EP-A- 0 227 423
- EP-A- 0 927 749
- EP-A- 1 584 647
- EP-A- 1 669 213
- WO-A-02/40599
- WO-A-03/054259
- WO-A-2007/118813
- WO-A-2007/131195
- US-A1- 2006 237 541
- DATABASE WPI Week 2000 Thomson Scientific, London, GB; AN 2000-649445 [63] XP002499928 & JP 2000 204320 A (KSK KK) 25 July 2000 (2000-07-25)
- DATABASE WPI Week 200368 Thomson Scientific, London, GB; AN 2003-712425 XP002499861 & JP 2003 253261 A (SONY CORP) 10 September 2003 (2003-09-10)

## Description

The present invention is in the field of security documents, more particularly in the field of security elements aimed to protect security documents against copying (illegal reproduction) and counterfeiting. It discloses a security element having a coating layer(s) which changes its visual appearance after irradiation with light, especially with UV light and reverts back to the original state within a few seconds. Security documents comprising said security element, as well as a method for producing said security element, are also disclosed.

Coatings, printings and markings exhibiting a viewing-angle- dependant visual appearance ("optically variable devices", OVDs) are used as efficient anti-copy means on banknotes and security documents (cf. "Optical Document Security", ed. R. L. van Renesse; 2nd edition, 1998, Artech House, London). Among the OVDs, optically variable ink (OVI®, EP-A-0227424) holds a pre-eminent position as an "overt" security element, since its first use on a banknote back in 1987. Optically variable inks are formulated on the base of optically variable pigments (OVPs), preferably flakes of the thin-film optical interference device disclosed in US4,434,010; US5,084,351; US5,171,363; EP-A-227423 and in related documents.

DE102004049734 discloses a colored plastic which comprises one or more luminescent colorant and one or more transparent and/or semitransparent effect pigment. Luminescent colorants which are suitable according to DE102004049734 are all organic or inorganic luminescent dyes or pigments known to the person skilled in the art which exhibit fluorescence or phosphorescence. In Example 1 lustrous injection mouldings having a golden mass tone under daylight which exhibit red luminescence in darkness are produced by injection-moulding a mixture of thermoplastic polypropylene, Lumilux® Effect Red N100 (Riedel de Haen) and Iriodin® 355 (mica coated with titanium dioxide and iron oxide)

W02004101890 relates to a flat dual security mark comprising two different security elements, one of which can be checked in the visible spectral region and the other in the ultraviolet spectral region of the light. Said security mark comprises plate-type effect pigments and luminescent, especially fluorescent pigments in such a low concentration that the latter can be recognised as individual particles with the naked eye under the action of UV light. The invention also relates to a method for producing said security mark and to the use of the same.
JP2002285061 provides a print the counterfeiting of which by a commercial color copying machine is very difficult. Of the print prevented from counterfeiting, at least a part of the printed area is printed with an ink for preventing counterfeiting containing a pearl pigment and a fluorescent pigment, and at the same time, at least a part is printed with an ink using the pearl pigment used for the ink for preventing counterfeiting.

W02008067887 relates to an optically variable security element for safeguarding objects against forgery, to a method for producing a security element of this type and to the use of said element.

In Example 2 of W02008067887 the preparation of a security element is described, comprising
a) an inner circular surface, consisting of a multilayer interference pigment on basis of mica having a colour flop from red to gold and a pigment showing a green fluorescence;
a) an outer adjacent circle, consisting of a multilayer interference pigment on basis of mica having a colour flop from gold to red and a pigment showing a red fluorescence.

At vertical observation the inner circular surface shows a red colour and the outer adjacent circle shows a gold colour. Dependant on the viewing angle the colour the inner circular surface changes to gold and the colour of the outer adjacent circle changes to red. On irradiation with UV light the inner circular surface shows a green fluorescence and the outer adjacent circle shows a red fluorescence.

Printed optically variable elements on security documents are primarily used for the "overt" authentication of security documents by the unaided human eye, through the user's checking of said element's spectral reflection properties, i.e. its color at two or more different angles of view, at least at nearorthogonal and at near grazing view with respect to the plane of the document. Said angle-dependent color is a "simple message of authenticity", which cannot be reproduced without having access to the source of the genuine optically variable security element, and which can easily be checked by the "main on the street".

EP0927749 is directed to the use of particles comprising at least two thin inorganic layers (multilayer pigment), distinct in their chemical composition, in a predefined analytically identifiable sequence and/or predefined analytically identifiable thickness as a tag;
a method for tagging a substrate, comprising the steps of
A. producing particles consisting of at least two thin inorganic layers, distinct in their chemical composition, in a predefined sequence and/or predefined thickness,
B. incorporating the particles obtained in step A into a coating composition,
C. applying the coating composition of step B to a substrate,
D. hardening of the coating composition applied in step C; and a coating composition comprising at least one binder and the particles comprising at least two thin inorganic layers.
Examples of the multilayer pigment are LaF₃/MgF₂/CeF₃ and LaF₃/CeF₃/GdF₃/LaF₃/CeF₃

JP2003253261 describes a first composite material which is formed of a fluorescent substance such as SrAl₂O₄:Eu and an elastic material such as a polyester resin. The composite material formed into a sheet having a thickness of ≤ 1 mm to provide a stress luminescent material. A second composite material is formed of a fluorescent substance such as SrAl₂O₄:Eu and a piezoelectric material. A luminescent element which can be controlled through an electric signal from the outside is realized by using the second composite material.

JP2003253261 describes a phosphorescent pigment and coating material which are composed of (A) a phosphorescent material and (B) a fluorescent/phosphorescent body emitting visible rays, when excited by light other than the visible, in such a way that the components A and B absorbing light energy from the light source to emit light of different wavelength are acted on each other so that the light emitted from the component A interferes with the one from the component B to emit colors different from those emitted by them individually.

W003054259 discloses a security article comprising a matrix component in which: (A) at least one particle scattering colorant is dispersed; and (B) at least one luminescent substance is dispersed.

US2006237541 discloses a pigment particle comprising:
a core having a carrier substance and at least one of a fluorescent material and a phosphorescent material, the core having a substantially spherical shape;
a shell surrounding the core, the shell including a photochromic material which has a first optical property in a first light source and a second optical property in a second light source which includes a set of wavelengths not sufficiently present in the first light source, and wherein the second optical property attenuates an emitted radiation from the at least one of the fluorescent material and the phosphorescent material.
In the embodiment of FIG. 1 a reflective pigment (shown red) would be applied to a substrate (e.g. paper for a currency or another object), followed by the application of an absorption varying material (photochromic or saturable absorber), followed by a UV fluorescent pigment (shown green). Under ambient visible light, the photochromic material is transparent, and the UV fluorescer is colorless, so the substrate material appears red to the observer. When exposed to UV light the fluorescer begins to emit green light, which in conjunction with the reflected red, changes the appearance of the substrate to a color representing a mixture of these wavelengths (red+green). As the photochromic begins to darken, light is blocked from the red reflective pigment, and the observed color that is delivered to the observer from the substrate contains only the fluorescent emission (i.e.. green). Thus, the original red color of the substrate undergoes a color shift (from red to yellow to green in this example) when the substrate is exposed to UV radiation.

EP1584647 describes a film material with optically variable effects comprising an absorbing or diffusely scattering layer and a layer containing optically variable pigments.

EP1669213 discloses a security element having a coating layer which appears transparent at certain angles of view, giving visual access to underlying information, whilst staying opaque at other angles of view ("Venetian Blind effect"). Documents of value, right, identity, security labels or branded goods comprising said security element, as well as a method for producing said security element, are also disclosed. Using appropriate substrate surfaces, optically variable and otherwise angle-dependent visual effects can be realized.

EP1719636 discloses a security element for a banknote, a document of value, right or identity, a ticket, a label, a branded good identifier, or a tax banderole. The element comprises a combination of a coating containing at least one optically variable pigment (P) having a substantial viewing-angle dependent colour variation, with at least one selective spectral absorbing material (A), which blocks out visible spectral components reflected by the optically variable pigment (P) at orthogonal incidence. The security element appears black when viewed at orthogonal angle, and coloured when viewed at grazing angle

US2005035331 relates to a phosphorescent blend comprising:
at least one type of persistent self-glowing material emitting in a wavelength range of less than 800 nm and greater than 400 nm with a substantial weight-mixing fraction;
at least one type of highly reflective functional pigment enhancing the effect of the said self-glowing material with a substantial weight-mixing fraction;
at least one type of substrate composite material binding the said blend with a substantial weight-mixing ration.

WO03054259A1 relates to a security article comprising a matrix component in which: (A) at least one particle scattering colorant is dispersed: and (B) at least one luminescent substance is dispersed: wherein: (1) said at least one particle scattering colorant comprises particles selected from the group consisting of a semiconductor, metallic conductor, metal oxide, metal salt or mixture thereof; (2) said at least one particle scattering colorant has an average cross-sectional size in the smallest dimension of less than about 0.2 micron; (3) said polymer matrix component is substantially non-absorbing in the visible region of the spectrum ; (4) said particle scattering colorant has a minimum in the transmitted light intensity ratio in the 380 to 750 nanometer range that is shifted at least by 10 nanometers compared with that obtained for the same semiconductor, metallic conductor, metal oxide, metal salt or mixture thereof having an average particle size above about 20 microns ; and (5) said luminescent substance is selected from the group consisting of at least one fluorescent substance, at least one phosphorescent substance, mixtures of at least one fluorescent and at least one phosphorescent substance, wherein said luminescent substance exhibits a luminescent spectral response peak when excited by at least one wavelength selected from the electromagnetic spectral region of from about 200 to about 2,000 nanometers. Among others SrAl₂O₄: Eu Dy is mentioned as an example of a phosphorescent substance.

The examples of WO03054259A relate to the production of nylon filaments, comprising LUMILUX Red CD 740 (Honeywell Specialty Chemicals) and colloidal particles which are prepared in situ by adding a metal salt, such as gold (III) chloride, or silver nitrate, to a polymer, such as nylon 6, blending and extruding the mixture.

JP2000204320 relates to a phosphorescent pigment and coating material. The phosphorescent pigment and coating material are composed of (A) a phosphorescent material and (B) a fluorescent/phosphorescent body emitting visible rays, when excited by light other than the visible, in such a way that the components A and B absorbing light energy from the light source to emit light of different wavelength are acted on each other so that the light emitted from the component A interferes with the one from the component B to emit colors different from those emitted by them individually. The luminous laver may be arranged below a visible colour layer.

The inorganic phosphorescent pigments used according to the present invention are not mentioned in US20060237541 and JP2000204320.

It was the object of the present invention to provide a security element which overcomes the drawbacks of the prior art, i.e. which displays a more evident visual colour change and which can easily be checked by the "man on the street".

Accordingly, the present invention relates to a security element for a document of value, right, identity, for a security label or a branded good, comprising a substrate, which may contain indicia or other visible features in or on its surface, and on at least part of the said substrate surface, comprising a pigment composition according to the present invention; or (a) a coating layer, comprising partially, or fully an inorganic phosphorescent pigment, and (b) a coating layer, comprising a transparent organic, or inorganic pigment, wherein the inorganic phosphorescent pigment comprises a matrix of formula MAl₂O₄ wherein M is calcium, strontium or barium, or a matrix of formula (M'xM"y)Al₂O₄ wherein x + y = 1 and M' and M", which are different, are each a metal selected from calcium, barium, strontium and magnesium.

Preferably, the security element comprises (a) a coating layer, comprising partially, or fully an inorganic phosphorescent pigment, and (b) a coating layer, comprising a transparent organic, or inorganic pigment. Usually the coating layer, comprising the transparent pigment, is applied on top of the coating layer, comprising the inorganic phosphorescent pigment. That is, in that case the security element comprises subsequently:
- the substrate,
- the coating layer, comprising the inorganic phosphorescent pigment, and
- the coating layer, comprising the transparent pigment.

The mode of operation of the security element of the present invention is described on basis of a transparent organic pigment as colorant and an inorganic phosphorescent substance, but is not limited thereto.

At least part of a substrate is coated with a layer (first layer), comprising the inorganic phosphorescent substance. On top of the first layer is coated a second layer, comprising the transparent organic pigment.

The coating comprising the inorganic phosphorescent substance can have a form. The form may be, for example, a symbol, a stripe, a geometric form, a fancy emblem, a writing, an alphanumeric character, a depiction of an object, or a part thereof.

When the phosphorescent inorganic substance is excited by UV light, the visual appearance of the system, comprising the phosphorescent inorganic substance and the transparent colorant, changes because of the phosphorescence of the phosphorescent inorganic substance. Within a few seconds the visual appearance reverts back to its original state.
Said colour change is a "simple message of authenticity", which can be checked by the unaided human eye.

A better effect is achieved, if only part of the first layer is excited by UV light. Said part changes its visual appearance, whereas the visual appearance of the residual part is unchanged. Said colour change can be checked by the unaided human eye by simply covering part of the first layer, for example, with the thumb and irradiation with UV light. The part covered with the thumb remains unchanged, whereas the residual part changes its visual appearance. By removal of the thumb the unchanged residual part of the first layer appears, which is different to the excited part in visual appearance. The effect is visually detectable.

If the first layer is excited by UV-A light, part of the second layer can be coated with a UV-A absorber. The part of the second layer covered with the UV-A absorber doesn't change its visual appearance when excited with UV-A light.

In a particularly preferred embodiment of the present invention the UV-A absorber is coated in form of a logo on the second surface and the logo becomes visible, when excited with UV-A light.

A similar effect can be achieved, when the inorganic phosphorescent compound is only contained in part of the first layer, so that it forms also a logo. The logo becomes visible, when excited with UV-A light.

In case the inorganic phosphorescent compound is only contained in part of the first layer, the residual part of the first layer may need to contain a compound which is metameric to the inorganic phosphorescent compound, so that the security element of the present invention has a uniform visual appearance.

The change of the visual appearance of the system can in practice be achieved in one of the following ways: i) by the addition of a transparent pigment to a composition of the phosphorescent inorganic substance, such as an ink comprising said phosphorescent inorganic substance; ii) by overprinting/coating a phosphorescent coating with a second coating composition comprising the transparent pigment; or iii) by applying over said phosphorescent coating a foil or decal, comprising a transparent pigment.

The respective amount of phosphorescent inorganic pigment and transparent pigment are chosen according to the desired optical effect, provided however that the visual color change underlying the present invention remains observable. Typical amounts to be used are in the range of: 80-99.99 wt.-%, preferably 90-99.99 wt.-% of said phosphorescent inorganic pigment; and 0.01-20 wt.%, preferably 0.01-10 wt.-% of said transparent organic pigment, based on the amount of phosphorescent inorganic pigment and transparent pigment. Typical amounts of transparent inorganic pigment to be used are in the range of: 10-40 wt.-%.

To further increase the counterfeit resistance of the herein disclosed security element, the coating(s) and/or said foil or decal can be made to exhibit additional properties, such as magnetism, infrared absorption, etc. This can be achieved by adding at least one material selected from the group consisting of the magnetic materials, and the infrared absorbing materials, to at least one portion of said security element.

Another way to use the color-changing security element of the present invention is to apply it close to a not color-shifting element having a similar visual appearance before excitation of the phosphorescent inorganic substance, such that the perceived color change after excitation of the phosphorescent inorganic substance appears enhanced.

Furthermore, the security element according to the invention can be combined with, or applied in the form of indicia of any type. Said indicia can hereby be produced through printing, laser marking, magnetic orientation, etc.

The coatings of the invention can be applied using the printing methods known in the art, such as engraved steel plate (intaglio), silkscreen, gravure, offset, letterpress- or flexographic printing. For applying a foil or decal the generally known methods of heat- or cold-stamping can be used.

The object of value to which the security element is applied may be for example a security paper, a security document, a textile garnet, or else a product package. Other objects of value that require security-type protection can of course also be provided with the inventive security element. Said security document is preferably selected from the group of documents consisting of banknotes, documents of value, right or identity, labels, branded good identifiers, and tax banderoles.

The security element is produced by a method, comprising the steps of
a) providing a substrate having a surface, which surface may contain indicia or other visible features;
b) applying, on top of at least part of the said substrate surface a coating, comprising an inorganic phosphorescent pigment (substance), a transparent pigment and a curable transparent binder, and
(c) curing said coating layer; or
a) providing a substrate having a surface, which surface may contain indicia or other visible features;
b) applying, on top of at least part of the said substrate surface a coating, comprising an inorganic phosphorescent pigment (substance) and a (curable) transparent binder,
   b1) optionally curing said coating layer (b);
   b2) applying, on top of said coating layer (b) a coating, comprising a transparent pigment and a curable transparent binder, and
   (c) curing said coating layer(s), wherein the inorganic phosphorescent pigment comprises a matrix of formula MAl₂O₄ wherein M is calcium, strontium or barium, or a matrix of formula (M'xM"y)Al₂O₄ wherein x + y = 1 and M' and M", which are different, are each a metal selected from calcium, barium, strontium and magnesium.

Said coating layer(s) is preferably applied by a method chosen from screen printing, gravure/flexo printing, offset printing, or roller coating.

Said coating layer(s) may furthermore comprise additional security elements such as infrared luminescent compounds, infrared absorbing compounds, and magnetic substances.

Said indicia can be applied onto said substrate surface by a method selected from the group consisting of intaglio printing, letterpress printing, offset printing, screen printing, gravure/flexo printing, laser printing, laser marking, dye sublimation, and ink-jet printing.

In certain embodiments, e.g. security elements that are exposed to high mechanical or chemical load during use, it is expedient to provide the security element with a protective layer. The protective layer can be a foil laminated over the security element, or a protective lacquer layer. The protective lacquer layer can be applied all over or in partial areas. For the lacquer system one can use e.g. UV lacquers, hybrid lacquers, oleographic lacquers or dispersion lacquers of the one- or two-component type. The protective lacquer layer is preferably printed on, e.g. by flexography or offset printing.

The phosphorescent layer can also have a plurality of inorganic phosphorescent pigments with different phosphorescent colours. It is likewise possible to compose the phosphorescent layer of a plurality of phosphorescent layers containing different inorganic phosphorescent pigments with different phosphorescent colour.

The pigment composition, or pigment mixture used in the security element of the present invention is new.

Accordingly, the present invention relates also to a pigment composition, or pigment mixture, comprising
(A) an inorganic phosphorescent pigment (substance), and
(B) a transparent organic, or inorganic pigment, wherein the inorganic phosphorescent pigment comprises a matrix of formula MAl₂O₄ wherein M is calcium, strontium or barium, or a matrix of formula (M'xM"y)A₂O₄ wherein x + y = 1 and M' and M", which are different, are each a metal selected from calcium, barium, strontium and magnesium.

The respective amount of phosphorescent inorganic pigment and transparent pigment are chosen according to the desired optical effect, provided however that the visual color change underlying the present invention remains observable. Typical amounts to be used are in the range of: 80-99.99 wt.%, preferably 90-99.99 wt.-% of said phosphorescent inorganic pigment; and 0.01-20 wt.-%, preferably 0.01-10 wt.-% of said transparent organic pigment, based on the amount of phosphorescent inorganic pigment and transparent pigment. Typical amounts of transparent inorganic pigment to be used are in the range of: 10-40 wt.-%.

The two components A and B may be mixed to form a pigment composition (physical mixture).

Alternatively, component A may be coated, or deposited onto component B.

A pigment mixture (composite pigment) may also be prepared by a process comprising spray-drying an aqueous suspension consisting of discrete particles of component A and B (cf. US5562763).

The component B may be added to a slurry of a component B in an organic solvent such as ethylene glycol or isopropanol. The obtained slurry is treated with ultrasound for 5 minutes to 2 hours, filtered and dried. The final product may be calcined and further coated with for example a protective layer such as SiO₂. Reference is made, for example, to US5,407,746. Component B may be trapped in a metal oxide layer, such as a silicon oxide, or an aluminum oxide layer, additionally precipitated on component A. The process for the preparation of such particles involves the precipitation of the metal oxide onto component A in the presence of component B.

A pigment mixture can also be prepared as described in US4772331 by admixing a suspension or solution of component B and a high molecular weight organic compound in water and/or an alcohol with a suspension of component A in a solution of a high molecular weight organic compound in water and/or alcohol whereby said component B is precipitated onto the surface of said component A and bound thereto by said high molecular weight organic compound.

Alternatively, component A with a surface modified by component B may be obtained as described in WO2005/056696 by trapping component B in one or several layers of immobilised LCST and/or UCST polymers.

The LCST (LCST = lower critical solution temperature) polymers may be selected from polyalkylenoxide derivatives, olefinic modified PEO-PPO-co-polymers, polymethylvinylether, poly-N- vinylcaprolactam, ethyl-(hydroxyethyl)-cellulose, poly-(N-isopropylacrylamide) and polysiloxanes and mixtures thereof.

The UCST(UCST = Upper Critical Solution Temperature) polymers may be selected from polystyrol, polystyrol-copolymers and polyethylenoxide-copolymers and mixtures thereof.

The substrate is contacted with a solution from a polymer that has UCST properties and a layer is deposited on the surface of the substrate by reducing the temperature of the polymer solution (WO03014229).

In the context of the present invention, "transparent" is used in the sense of "allowing the human eye to see through, at least in some part of the visible spectrum".

In another aspect the present invention is directed to a coating, or a film material, comprising
(a) a layer, comprising a pigment composition according to the present invention, wherein the pigment composition is present in at least part of said layer; or
(a) a layer, comprising an inorganic phosphorescent pigment, wherein the inorganic phosphorescent pigment is present in at least part of said layer, and
(b) a layer comprising a transparent organic, or inorganic pigment, wherein the inorganic phosphorescent pigment comprises a matrix of formula MAl₂O₄ wherein M is calcium, strontium or barium, or a matrix of formula (M'xM"y)Al₂O₄ wherein x + y = 1 and M' and M", which are different, are each a metal selected from calcium; barium, strontium and magnesium.

The content of the phosphorescent substance in the total composition that constitutes the luminous ink without the solvent, is 1 to 60% by weight, preferably from 1 to 40% by weight.
The content of the transparent organic substance in the total composition that constitutes the luminous ink without the solvent, is 0.01 to 20% by weight, preferably from 0.01 to 10% by weight. The content of the transparent inorganic substance in the total composition that constitutes the luminous ink without the solvent, is from 1 to 40% by weight.
The content of the pigment mixture in the total composition that constitutes the luminous ink without the solvent, is 1 to 60% by weight, preferably from 1 to 40% by weight.

A phosphorescent ink according to the present invention comprises, as in the case of an ordinary printing ink, a phosphorescent inorganic substance, a vehicle, an auxiliary agent, and the like.

It is further preferable to apply a surface treatment to the phosphorescent substance in order to improve the properties of the phosphorescent substance (hiding power, coloring ability, oil absorbing ability, durability, and the like). In case wherein an inorganic phosphorescent substance is used, it is preferable to apply a surface treatment thereto to improve its affinity to an oleophilic polymer, since its surface is hydrophilic and hence is of a poor affinity to an oleophilic polymer. Such methods for example include the following methods.
(a) Coating: Coating functions as a kind of a surfactant. For example, a dispersing agent including fatty acids and fatty acid salts of a low molecular weight or a high molecular weight, a dispersing agent of wax, or the like may be used.
(b) Coupling agent: A coupling agent tightly bonds with the phosphorescent substance and reacts with a polymer as well. For example a silane compound, a titanium compound, a metallic chelate compound, or the like, may be used.
(c) Polymerizable monomer: A low molecular weight monomer or oligomer is made to react with the surface of the phosphorescent substance to form an irreversible layer. For example, a polymerizable organic acid, or a reactive oligomer may be used.

With respect to the vehicle of the luminous ink according to the present invention, one that does not substantially have an absorption band in the wavelength range of ultraviolet light that excite the fluorescent substance and in the wavelength range of visible light is preferred. With respect to the binder resin which is a principal constituent of the vehicle, a thermoplastic resin may be used, examples of which include, polyethylene based polymers [polyethylene (PE), ethylene-vinyl acetate copolymer (EVA), vinyl chloride-vinyl acetate copolymer], polypropylene (PP), vinyl based polymers [poly(vinyl chloride) (PVC), poly(vinyl butyral) (PVB), poly(vinyl alcohol) (PVA), poly(vinylidene chloride) (PVdC), poly(vinyl acetate) (PVAc), poly(vinyl formal) (PVF)], polystyrene based polymers [polystyrene (PS), styrene-acrylonitrile copolymer (AS), acrylonitrile-butadiene-styrene copolymer (ABS)], acrylic based polymers [poly(methyl methacrylate) (PMMA), MMA-styrene copolymer], polycarbonate (PC), celluloses [ethyl cellulose (EC),cellulose acetate (CA), propyl cellulose (CP), cellulose acetate butyrate (CAB), cellulose nitrate (CN)], fluorin based polymers [polychlorofluoroethylene (PCTFE), polytetrafluoroethylene (PTFE), tetrafluoroethylene-hexafluoroethylene copolymer (FEP), poly(vinylidene fluoride) (PVdF)], urethane based polymers (PU), nylons [type 6, type 66, type 610, type 11], polyesters (alkyl) [polyethylene terephthalate (PET), polybutylene terephthalate (PBT), polycyclohexane terephthalate (PCT)], novolac type phenolic resins, or the like. In addition, thermosetting resins such as resol type phenolic resin, a urea resin, a melamine resin, a polyurethane resin, an epoxy resin, an unsaturated polyester and the like, and natural resins such as protein, gum, shellac, copal, starch and rosin may also be used.

Further, the above resins may be in an emulsion form for use in a water-based paint. Emulsions for use in a water-based paint include for example, a vinyl acetate (homopolymer) emulsion, a vinyl acetate-acrylic ester copolymer emulsion, a vinyl acetate-ethylene copolymer emulsion (EVA emulsion), a vinyl acetate-vinyl versatate copolymer resin emulsion, a vinyl acetate-polyvinyl alcohol copolymer resin emulsion, a vinyl acetate-vinyl chloride copolymer resin emulsion, an acrylic emulsion, an acryl silicone emulsion, a styrene-acrylate copolymer resin emulsion, a polystyrene emulsion, an urethane polymer emulsion, a polyolefin chloride emulsion, an epoxy-acrylate dispersion, an SBR latex, and the like.

Furthermore, to the vehicle, a plasticizer for stabilizing the flexibility and strength of the print film and a solvent for adjusting the viscosity and drying property thereof may be added according to the needs therefor. A solvent of a low boiling temperature of about 100°C and a petroleum solvent of a high boiling temperature of 250°C or higher, may be used according to the type of the printing method. An alkylbenzene or the like, for example may be used as a solvent of a low boiling temperature.

Further in addition, an auxiliary agent including a variety of reactive agents for improving drying property, viscosity, and dispersibility, may suitably be added. The auxiliary agents are to adjust the performance of the ink, and for example, a compound that improves the abrasion resistance of the ink surface and a drying agent that accelerates the drying of the ink, and the like may be employed.

A photopolymerization-curable resin or an electron beam curable resin wherein a solvent is not used may also be employed as a binder resin that is a principal component of the vehicle. The examples thereof include an acrylic resin, and specific examples of acrylic monomers commercially available are shown below.

A monofunctional acrylate monomer that may be used includes for example, 2-ethylhexyl acrylate, 2-ethylhexyl-EO adduct acrylate, ethoxydiethylene glycol acrylate, 2-hydroxyethyl acrylate, 2-hydroxypropyl acrylate, 2-hydroxyethyl acrylate-caprolactone addduct, 2-phenoxyethyl acrylate, phenoxydiethylene glycol acrylate, nonyl phenol-EO adduct acrylate, (nonyl phenol-EO adduct)-caprolactone adduct acrylate, 2-hydroxy-3-phenoxypropyl acrylate, tetrahydrofurfuryl acrylate, furfuryl alcohol-caprolactone adduct acrylate, acryloyl morpholine, dicyclopentenyl acrylate, dicyclopentanyl acrylate, dicyclopentenyloxyethyl acrylate, isobornyl acrylate, (4,4-dimethyl-1,3-dioxane)-caprolactone adduct acrylate, (3-methyl-5,5-dimethyl-1,3-dioxane)-caprolactone adduct acrylate, and the like.

A polyfunctional acrylate monomer that may be used includes hexanediol diacrylate, neopentyl glycol diacrylate, polyethylene glycol diacrylate, tripropylene glycol diacrylate, neopentyl glycol hydroxypivalate diacrylate, (neopentyl glycol hydroxypivalate)-caprolactone adduct diacrylate, (1,6-hexanediol diglycidyl ether)-acrylic acid adduct, (hydroxypivalaldehyde-trimethylolpropane acetal) diacrylate, 2,2-bis[4-(acryloyloxydiethoxy)phenyl]propane, 2,2-bis[4-(acryloyloxydiethoxy)phenyl]methane, hydrogenated bisphenol A-ethylene oxide adduct diacrylate, tricyclodecanedimethanol diacrylate, trimethylolpropane triacrylate, pentaerithritol triacrylate, (trimethylolpropane-propylene oxide) adduct triacrylate, glycerine-propylene oxide adduct triacrylate, a mixture of dipentaerithritol hexaacrylate and pentaacrylate, esters of dipentaerithritol and lower fatty acid and acrylic acid, dipentaerithritol-caprolactone adduct acrylate, tris(acryloyloxyethyl) isocyanurate, 2-acryloyloxyethyl phosphate, and the like.

Inks comprising the above resins are free of solvent and are so constituted as to polymerize in chain reaction upon irradiation by an electron beam or electromagnetic waves.

With respect to inks of ultraviolet-irradiation type among these inks, a photopolymerization initiator, and depending on the needs therefor, a sensitizing agent, and auxiliary agents such as a polymerization inhibitor and a chain transfer agent, and the like may be added thereto.

With respect to photo-polymerization initiators, there are, (1) an initiator of direct photolysis type including an arylalkyl ketone, an oxime ketone, an acylphosphine oxide, or the like, (2) an initiator of radical polymerization reaction type including a benzophenone derivative, a thioxanthone derivative, or the like, (3) an initiator of cationic polymerization reaction type including an aryl diazonium salt, an aryl iodinium salt, an aryl sulfonium salt, and an aryl acetophenone salt, or the like, and in addition, (4) an initiator of energy transfer type, (5) an initiator of photoredox type, (6) an initiator of electron transfer type, and the like. With respect to the inks of electron beam-curable type, a photopolymerization initiator is not necessary and a resin of the same type as in the case of the ultraviolet-irradiation type inks can be used, and various kinds of auxiliary agent may be added thereto according to the needs therefor.

A further aspect of the present invention relates to a phosphorescent image formed by printing an inorganic phosphorescent pigment, and a transparent organic, or inorganic pigment, comprising a phosphorescent image-forming layer on said substrate, or a phosphorescent image-forming layer and a colored transparent layer on said substrate, wherein
the phosphorescent image-forming layer comprises an inorganic phosphorescent pigment and a transparent organic, or inorganic pigment; or wherein the phosphorescent image-forming layer comprises an inorganic phosphorescent pigment, and the colored transparent layer comprises a transparent organic, or inorganic pigment, wherein the inorganic phosphorescent pigment comprises a matrix of formula MAl₂O₄ wherein M is calcium, strontium or barium, or a matrix of formula (M'xM"y)Al₂O₂ wherein x + v = 1 and M' and M", which are different, are each a metal selected from calcium, barium, strontium and magnesium.

The phosphorescent image formed product according to the present invention can be obtained by forming a phosphorescent image forming layer on a substrate using the phosphorescent ink by a variety of methods known in the art. For example, an anastatic printing method, an intaglio printing method, a gravure printing method, a planographic printing method of offset printing type, a screen (perforated plate) printing method, a relief type printing method such as flexo or letter press printing or the like may be used. In addition, a thermal transfer method or an ink jet printing method may be used as well. In case of using a thermal transfer method, it is preferable to maintain enough amount of light by keeping the thickness of the fluorescent image-forming layer at least equal to or higher than 6 µm, and hence it is preferable to add a binder or a wax such as carbana wax to the image-forming layer. Since it is preferable to thermally melt the surface of the ink, it is preferable to use a thermoplastic resin as a binder resin, which is a principal component of the vehicle.

The thickness of the phosphorescent image-forming layer can be somewhere between 1 and 200 µm.

The film material is preferably a transfer film material. The transfer film material has an adhesive layer which allows its transfer to a substrate. The transfer film material can be used for the production of security labels for data processing media, documents of value, right, identity, branded goods, etc.

As substrate materials there may be mentioned, for example:
- cellulose-containing materials, such as paper, pasteboard, cardboard, wood and wooden materials, which may also be lacquered or coated in some other way,
- metallic materials, such as foils, sheet metal or workpieces of aluminium, iron, copper, silver, gold, zinc or alloys of those metals, which may be lacquered or coated in some other way,
- silicate materials, such as glass, porcelain and ceramics, which may likewise be coated,
- polymeric materials of any kind, such as polystyrene, polyamides, polyesters, polyethylene, polypropylene, melamine resins, polyacrylates, polyacrylonitrile, polyurethanes, polycarbonates, polyvinyl chloride and corresponding copolymers and block copolymers,
- textile materials, such as fibres, yarns, twisted yarns, knitted goods, wovens, non-wovens and made-up goods of polyester or of modified polyester, polyester blends, cellulose-containing materials, such as cotton, cotton blends, jute, flax, hemp and ramie, viscose, wool, silk, polyamide, polyamide blends, polyacrylonitrile, triacetate, acetate, polycarbonate, polypropylene, polyvinyl chloride, polyester microfibres and glass fibre fabrics,
- leathers, both natural leather and synthetic leather, in the form of smooth-finished leather, nappa leather or velour leather.

The transparent pigment is selected from the group consisting of transparent organic pigments, or inorganic pigments, including color and/or effect pigments, electrically conductive pigments, fluorescent pigments, fillers, nanoparticles, and combinations thereof.

In a preferred embodiment of the present invention the transparent pigment is a transparent organic pigment, or a transparent inorganic colour pigment.

The transparent organic pigment is preferably a transparent organic pigment having a mean particle size below 0.2 µm, preferably below 0.1 µm. Particularly interesting organic transparent pigments include the transparent quinacridones in their magenta and red colors, the transparent yellow pigments, like the isoindolinones or the yellow quinacridone/quinacridonequinone solid solutions, transparent copper phthalocyanine blue and halogenated copper phthalocyanine green, or the highly-saturated transparent diketopyrrolopyrrole or dioxazine pigments; especially a transparent quinacridone pigment or a transparent diketopyrrolopyrrole pigment.

Examples of commercially available products are MICROLITH DPP Red B-K, IRGAZIN DPP Red BTR, CROMOPHTAL Yellow GR, CROMOPHTAL Orange GP, CROMOPHTAL DPP Rot BP, CROMOPHTAL Violet GP, CROMOPHTAL Blue A3R, IRGAZIN Green 2180 and ORASOL Black RLI (Ciba Specialty Chemicals).

The expression "inorganic filler" means a substantially transparent inorganic pigment. For example, mica, kaolin, talc, wollastonite and natural or synthetic silica, e.g. glass, are well-known inorganic fillers that are suitable for use in the pigment compositions of the present invention. Talc, muscovite mica and kaolin are highly suitable inorganic fillers. Talc and transparent micas are especially suitable. Of the micas, muscovite, phlogopite, brolite and synthetic micas are the most suitable.

In another preferred embodiment of the present invention the transparent pigment is an effect pigment.

Multilayered structures leading to interference colors are often referred to as special-effect pigments, luster or nacreous pigments and well known in the art and commercially available under such tradenames as Xymara® (Ciba Specialty Chemicals Inc.), Iriodin®, Colorstream®, Xyrralic® etc.

In principle component B might comprise all platelet-like transparent effect pigments, such as, for example, platelet-like materials coated with colored or colorless metal oxides, such as, for example, natural or synthetic micas, other laminated silicates such as talc, kaolin or sericite or glass platelets. Mica flakes coated with metal oxides which are disclosed, for example, in US-A-3,087,828 and 3,087,829 are particularly preferred as substrates. Metal oxides are both colorless, highly refractive metal oxides, such as, in particular, titanium dioxide and/or zirconium dioxide, as well as colored metal oxides, such as, for example, chromium oxide, nickel oxide, copper oxide, cobalt oxide and in particular iron oxides, such as, for example, Fe₂O₃, or mixtures of such metal oxides. Such metal oxide/mica pigments are commercially available under the tradenames Xymara®, Afflair® and Iriodin®.

These (multilayer) structures frequently are formed from a core of natural micaceous iron oxide (for example as in WO 99/48634), synthetic and doped micaceous iron oxide (for example as in EP-A 0 068 311), mica (muscovite, phlogopite, fluorophlogopite, synthetic fluorophlogopite, talc, kaolin), basic lead carbonate, flaky barium sulfate, SiO₂, Al₂O₃, TiO₂, glass, ZnO, ZrO₂, SnO₂, BiOCl, and flaky MgO. Particularly preferred cores are mica, SiO₂ flakes, Al₂O₃ flakes, TiO₂ flakes, BiOCl and glass flakes.

Transparent pearlescent pigments (including those which react under the fluidized bed conditions to nitrides, oxynitrides or by reduction to suboxides etc.) are, for example, described in EP-A-0948571, U.S. Patent Nos. 6,773,499, 6,508,876, 5,702,519, 5,858,078, WO98/53012, WO97/43348, US-B-6,165,260, DE-A-1519116, WO97/46624 and EP-A-0509352. Transparent pearlescent multilayer pigments are, for example, described in EP-A-0948572, EP-A-0882099, US-A-5,958,125, 6,139,613. Transparent coated, or uncoated SiO₂ spheres are, for example, known from EP-A-0803550, EP-A-1063265, JP-A-11322324), EP-A-0803550, EP-A-1063265 and JP-A-11322324.

The glass flake cores for the purpose of the invention include any of the known grades such as A-glass, E-glass (high resistivity makes E-glass suitable for electrical lami nates), C-glass and ECR-glass (corrosion grade glass) materials.

For example, component B particle may be a platelet-like (multilayered) structures such as:

| | | | |
|---|---|---|---|
| TRASUB | TiO₂ | | |
| TRASUB | TiO₂ | Fe₂O₃ | |
| TRASUB | TiO₂ | SiO₂ | |
| TRASUB | TiO₂ | SiO₂ | TiO₂ |
| TRASUB | TiO₂ | SiO₂ | Fe₂O₃ |
| TRASUB | TiO₂ | SiO₂ | TiO₂/Fe₂O₃ |
| TRASUB | SnO₂ | TiO₂ | |
| TRASUB | SnO₂ | TiO₂ | Fe₂O₃ |
| TRASUB | TiO₂/Fe₂O₃ | SiO₂ | TiO₂/Fe₂O₃ |
| TRASUB | Fe₂O₃ | | |
| TRASUB | Fe₂O₃ | SiO₂ | TiO₂ |
| TRASUB | TiO₂ | SiO₂ | TiO₂ + SiO₂ + TiO₂ |
| TRASUB | TiO₂ + SiO₂ + TiO₂ | SiO₂ | TiO₂ + SiO₂ + TiO₂ |
| TRASUB | TiO₂ | Al₂O₃ | TiO₂ |
| TRASUB | Fe₂TiO₅ | SiO₂ | TiO₂ |
| TRASUB | TiO₂ | SiO₂ | Fe₂TiO₅/ TiO₂ |
| TRASUB | TiO₂ | SiO₂ | MoS₂ |
| TRASUB | TiO₂ | SiO₂ | Cr₂O₃ |
| TRASUB | TiO₂ | SiO₂ | TiO₂ + SiO₂ + TiO₂ + Prussian Blue |

wherein TRASUB is transparent substrate having a low index of refraction selected from the group consisting of natural, or synthetic mica, another layered silicate, glass, Al₂O₃ and SiO₂.

The (multilayered) pigments above may also include an absorption pigment as an additional layer. For example a further coating with Prussian blue or red-carmine on an interference pigment allows for striking color effects.

If the used effect pigments are goniochromatic, the security element of the present invention will also show a so-called flip-flop effect, i.e. a color change depending on the viewing angle.

Examples of transparent inorganic pigments are transparent yellow iron oxide [C.I. Pigment Yellow 42:77 492], transparent red iron oxide [C.I. Pigment Red 101:77 491], transparent Cobalt Blue [C.I. Pigment Blue 28 : 77 346], transparent Cobalt Green [C.I. Pigment Green 19:77 335].

Examples of commercially available products are BAYFERROX 3920, BAYFERROX 920 BAYFERROX 645T, BAYFERROX 303T, BAYFERROX 110, BAYFERROX 110 M, CHROMOXIDGRUEN GN, and CHROMOXIDGRUEN GN-M.

In principle, any inorganic phosphorescent substance can be used according to the present. Examples of preferred substances are given below. The decay time of the inorganic phosphorescent substance should be preferably in the range of a few seconds. It should be noted that the decay time is dependent on the particle size and the particle size distribution of the substances.

Inorganic phosphorescent substances emitting visible light are, for example, described in EP-A1-0622440.

The inorganic phosphorescent substances described therein comprise a matrix of formula MAl₂O₄ wherein M is calcium, strontium or barium, or a matrix of formula (M'xM"y)Al₂O₄ wherein x + y = 1 and M' and M", which are different, are each a metal selected from calcium, barium, strontium and magnesium. The matrix comprises europium as activator. The matrix comprises, as co-activator, at least one element selected from lanthanum, cerium, praseodymium, neodymium, samarium, gadolinium, terbium, dysprosium, holmium, erbium, thulium, ytterbium, lutetium, manganese, tin and bismuth.

The matrix comprises europium in an amount of 0.001 to 10 mol% relative to the metal or metals in the matrix. The co-activator is comprised in an amount of 0.001 to 10 mol % relative to the metal or metals in the matrix.

A list of phosphorescent inorganic materials, which can advantageously be used according to the present invention, is given below:

| Formula | Emission Color |
|---|---|
| MgAl₂O₄: Ce³⁺ | green |
| CaAl₂O₄ : Mn²⁺,Ce³⁺ | green |
| CaAl₂O₄ : Eu²⁺,Nd³⁺ | blue |
| Ca_{1-x-y}Al₂O₄ : Euₓ²⁺,Nd_{y}³⁺ | blue |
| (0 ≤ x ≤ 0,045; 0 ≤ y ≤ 0,0037) | |
| opt.: x = 0,00125; y = 0,0025 | |
| CaAl₂O₄ : Eu²⁺,Nd³⁺ | blue |
| CaAl₂O₄ : Eu²⁺,Nd³⁺,La³⁺ | blue-violet |
| CaAl₄O7 : Eu²⁺,Nd³⁺ | |
| Ca1-xSrxAl₂O₄: Eu²⁺,Nd³⁺,La³⁺ | |
| SrAl₂O₄ : Ce³⁺ | |
| SrAl₂O₄ : Eu²⁺ | green |
| SrAl₂O₄ : Eu²⁺,B³⁺ | green |
| SrAl₂O₄ : Eu²⁺,Nd³⁺ | |
| SrAl₂O₄ Eu²⁺Dy³⁺ | green |
| | |
| MAl₂O₄: Eu²⁺,Dy³⁺ M: Sr, (Ba/Ca) or M: Sr,Ba,Ca | f(m) |

The inorganic phosphorescent substances exhibit intense phosphorescence during and after irradiation with visible, or ultra violet light.

In practice either visible light, long-wavelength UV (365 nm, or 395 nm) or short-wavelength UV (254 nm) is generally used to induce phosphorescence. The phosphorescence represents the radiative decay of a triplet excited state to the singlet ground state; this transition is forbidden and the triplet state has a relatively long lifetime, i.e. a decay time above 300 milliseconds.

The particle size of the phosphorescent inorganic pigments is of crucial importance for its characteristics of phosphorescence such as brightness, decay time as well as the printability in case they are incorporated into an ink, or coating. With respect to the phosphorescent inorganic pigment particles to be used, the diameter of 90 percent of the particles (D90) is equal to or less than 25 µm and equal to or more than 0.5 µm.

The decay time of the inorganic phosphorescent substances is dependent on the particle size and the particle size distribution of the substances. The decay time should be preferably in the range of a few seconds.

The phosphorescent inorganic substance is excited by UV light, or by visible light. The visual appearance of the system, comprising the phosphorescent inorganic substance and the transparent colorant, changes by the phosphorescence of the phosphorescent inorganic substance. Within a few seconds the visual appearance reverts back to its original state.

Accordingly, the present invention is also directed to a method for testing an object of value, right, identity, security label, branded good, comprising the step of checking whether a colour shift is present upon irradiation with light.

Various features and aspects of the present invention are illustrated further in the examples that follow. While these examples are presented to show one skilled in the art how to operate within the scope of this invention, they are not to serve as a limitation on the scope of the invention where such scope is only defined in the claims. Unless otherwise indicated in the following examples and elsewhere in the specification and claims, all parts and percentages are by weight, temperatures are in degrees centigrade and pressures are at or near atmospheric.

### Examples

### Example 1 (screen-printing):

A red pigmented concentrate is prepared by mixing 12 parts of red pigment (MICROLITH DPP Red B-K) with 12.3 parts of vinylchlorid/vinylacetat copolymer (VYHH, Union Carbide), 8.8 parts of ethoxy propanol and 66.9 parts of methyl-ethyl-ketone and stirring with a Dispermat apparatus for 15 minutes at 2000 rpm.

A photochromic ink is prepared by mixing 40 parts of a SrAl₂O₄ : Eu²⁺ phosphor having a green phosphorescence and a mean particle size of about 3 µm, 52 parts of PRINTCOLOR binder (series 320-05) and 8 parts of the above prepared red concentrate.

Application of the thus obtained ink by screen-printing (Heinrich Mantel, Monolen, 54/67) provides a red uniform print on contrast paper which luminesces under UV light. Red to green photochromic effect is observed under UV light, by partial UV irradiation of the printed surface followed by uncovering of the non-irradiated surface.

### Example 2 (offset-printing):

An red pigmented concentrate is prepared by mixing 0.5 parts of CROMOPHTAL DPP Red BP with 9.50 parts of E-25736 (binder from Epple) and dispersing in an Engelsmann apparatus with 2 times 50 rotations and 2kg pressure.

A photochromic ink is prepared by mixing 25 parts of a SrAl₂O₄ : Eu²⁺ phosphor having a green phosphorescence and a mean particle size of about 3 µm and 75 parts of the above prepared red concentrate and dispersing is again performed with Engelsmann apparatus with 2 times 50 rotations and 2kg pressure.

Application of the thus obtained ink by offset-printing (Prüfbau, 800N, 1 m/s) gives a transfer of 1.5g/m2 on contrast paper as a red uniform print which luminesces strongly under UV light. Red to green photochromic effect is observed under UV light, by partial UV irradiation of the printed surface followed by uncovering of the non-irradiated surface.

### Example 3 (offset-printing):

A green pigmented concentrate is prepared by mixing 0.5 parts of oleic acid with 5 parts of Chromoxidgruen GN-M and 4.5 parts of E-25736 (binder from Epple) and dispersing in an Engelsmann apparatus with 2 times 50 rotations and 2kg pressure.

A photochromic ink is prepared by mixing 0.5 parts of a SrAl₂O₄ : Eu²⁺ phosphor having a green phosphorescence and a mean particle size of about 3 µm and 2 parts of the above prepared green concentrate and dispersing is again performed with Engelsmann apparatus with 2 times 50 rotations and 2kg pressure.

Application of the thus obtained ink by offset-printing (Prüfbau, 800N, 1 m/s) gives a transfer of 2.1g/m² on contrast paper as a green uniform print which luminesces strongly under UV light. A dark green to bright green photochromic effect is observed under UV light, by partial UV irradiation of the printed surface followed by uncovering of the non-irradiated surface.

### Example 4 (offset-printing):

A black pigmented concentrate is prepared by mixing 0.5 parts of oleic acid with 5 parts of Chromoxidgruen GN-M and 4.5 parts of E-25736 (binder from Epple) and dispersing in an Engelsmann apparatus with 2 times 50 rotations and 2kg pressure.

A photochromic ink is prepared by mixing 0.5 parts of a SrAl₂O₄ : Eu²⁺ phosphor having a green phosphorescence and a mean particle size of about 3 µm and 2 parts of the above prepared black concentrate and dispersing is again performed with Engelsmann apparatus with 2 times 50 rotations and 2kg pressure.

Application of the thus obtained ink by offset-printing (Prüfbau, 800N, 1 m/s) gives a transfer of 2.5g/m2 on contrast paper as a black uniform print which luminesces strongly under UV light. Black to green photochromic effect is observed under UV light, by partial UV irradiation of the printed surface followed by uncovering of the non-irradiated surface.

## Claims

1. A pigment composition, comprising
(A) an inorganic phosphorescent pigment, and
(B) a transparent organic, or inorganic pigment, wherein the inorganic phosphorescent pigment comprises a matrix of formula MAl₂O₄ wherein M is calcium, strontium or barium, or a matrix of formula (M'xM"y)Al₂O₄ wherein x + y = 1 and M' and M", which are different, are each a metal selected from calcium, barium, strontium and magnesium.

2. A coating, or a film material, comprising
(a) a layer, comprising a pigment composition according to claim 1, wherein the pigment composition is present in at least part of said layer; or
(a) a layer, comprising an inorganic phosphorescent pigment, wherein the inorganic phosphorescent pigment is present in at least part of said layer, and
(b) a layer comprising a transparent organic, or inorganic pigment, wherein the inorganic phosphorescent pigment comprises a matrix of formula MAl₂O₄ wherein M is calcium, strontium or barium, or a matrix of formula (M'xM"y)Al₂O₄ wherein x + y = 1 and M' and M", which are different, are each a metal selected from calcium, barium, strontium and magnesium.

3. Security element for a document of value, right, identity, for a security label or a branded good, comprising a substrate, which may contain indicia or other visible features in or on its surface, and on at least part of the said substrate surface, comprising a pigment composition according to claim 1; or
(a) a coating layer, comprising partially, or fully an inorganic phosphorescent pigment, and
(b) a coating layer, comprising a transparent organic, or inorganic pigment, wherein the inorganic phosphorescent pigment comprises a matrix of formula MAl₂O₄ wherein M is calcium, strontium or barium, or a matrix of formula (M'xM"y)Al₂O₄ wherein x + y = 1 and M' and M", which are different, are each a metal selected from calcium, barium, strontium and magnesium.

4. The pigment composition, coating, film material, or security element according to claim 1, 2, or 3, wherein the inorganic phosphorescent pigment is selected from MgAl₂O₄ : Ce³⁺, CaAl₂O₄: Mn²⁺,Ce³⁺, CaAl₂O₄: Eu²⁺,Nd³⁺, Ca_{1-x-y}Al₂O₄ : Euₓ²⁺,Nd_{y}³⁺, (0 ≤ x ≤ 0,045; 0 ≤ y ≤ 0,0037), opt.: x = 0,00125; y = 0,0025, CaAl₂O₄ : Eu²⁺,Nd³⁺, CaAl₂O₄: Eu²⁺,Nd³⁺,La³⁺, CaAl₄O7 : Eu²⁺,Nd³⁺, Ca1-xSrxAl₂O₄ : Eu²⁺,Nd³⁺,La³⁺, SrAl₂O₄ : Ce³⁺, SrAl₂O₄ : Eu²⁺, SrAl₂O₄ : Eu²⁺,B³⁺, SrAl₂O₄ : Eu²⁺,Nd³⁺, SrAl₂O₄ : Eu²⁺,Dy³⁺, , MAl₂O₄ : Eu²⁺, Dy³⁺ M: Sr, (Ba/Ca) or M: Sr,Ba,Ca, Sr₄Al₁₄O₂₅ : Eu²⁺,RE³⁺ RE: Dy/Pr/Ho/Nd and/or Sm, Sr₄Al₁₄O₂₅ : Cr³⁺,Eu²⁺,Dy³⁺, and Sr₅Al₂O₇S : Eu²⁺.

5. The pigment composition, coating, film material, or security element according to claim 1, 2, or 3, wherein the transparent colorant is an inorganic pigment, such as transparent yellow iron oxide [C.I. Pigment Yellow 42:77 492], transparent red iron oxide [C.I. Pigment Red 101:77 491], transparent Cobalt Blue [C.I. Pigment Blue 28 : 77 346], transparent Cobalt Green [C.I. Pigment Green 19:77 335] and transparent chrome oxide green.

6. The pigment composition, coating, film material, or security element according to claim 1, 2, or 3, wherein the transparent colorant is an organic pigment, such as a transparent quinacridone in its magenta and red colors, a transparent yellow pigment, like an isoindolinone or a yellow quinacridone/quinacridonequinone solid solution, a transparent copper phthalocyanine blue and a halogenated copper phthalocyanine green, or a highly-saturated transparent diketopyrrolopyrrole or dioxazine pigment; especially a transparent quinacridone pigment or a transparent diketopyrrolopyrrole pigment.

7. The pigment composition, coating, film material, or security element according to claim 1, 2, or 3, wherein the transparent colorant is chrome oxide green, or a diketopyrrolopyrrole pigment and the inorganic phosphorescent pigment is a SrAl₂O₄ : Eu²⁺ phosphor having a green phosphorescence and a mean particle size of about 3 µm.

8. A method of producing a security element according to claim 3, comprising the steps of
a) providing a substrate having a surface, which surface may contain indicia or other visible features;
b) applying, on top of at least part of the said substrate surface a coating, comprising an inorganic phosphorescent pigment, a transparent organic, or inorganic pigment and a curable transparent binder, and
(c) curing said coating layer; or
a) providing a substrate having a surface, which surface may contain indicia or other visible features;
b) applying, on top of at least part of the said substrate surface a coating, comprising an inorganic phosphorescent pigment and a curable transparent binder,
b1) optionally curing said coating layer (b);
b2) applying, on top of said coating layer (b) a coating, comprising a transparent organic, or inorganic pigment and a curable transparent binder, and
(c) curing said coating layer(s), wherein the inorganic phosphorescent pigment comprises a matrix of formula MAl₂O₄ wherein M is calcium, strontium or barium, or a matrix of formula (M'xM"y)Al₂O₄ wherein x + y = 1 and M' and M", which are different, are each a metal selected from calcium, barium, strontium and magnesium.

9. A phosphorescent image formed by printing an inorganic phosphorescent pigment, and a transparent organic, or inorganic pigment, comprising a phosphorescent image-forming layer on said substrate, or a phosphorescent image-forming layer and a colored transparent layer on said substrate, wherein
the phosphorescent image-forming layer comprises an inorganic phosphorescent pigment and a transparent organic, or inorganic pigment, or wherein
the phosphorescent image-forming layer comprises an inorganic phosphorescent pigment and
the colored transparent layer comprises a transparent organic, or inorganic pigment, wherein the inorganic phosphorescent pigment comprises a matrix of formula MAl₂O₄ wherein M is calcium, strontium or barium, or a matrix of formula (M'xM"y)Al₂O₄ wherein x + y = 1 and M' and M", which are different, are each a metal selected from calcium, barium, strontium and magnesium.

10. Document of value, right, identity, security label, or branded good, comprising a security element according to claim 3.

11. Use of a security element according to claim 3, for the prevention of counterfeit or reproduction, on a document of value, right, identity, a security label or a branded good.

12. A method for testing an object of value, right, identity, security label, or branded good according to claim 10, comprising the step of checking whether a colour shift is present upon irradiation with light.

## Patentansprüche

1. Pigmentzusammensetzung, umfassend
(A) ein anorganisches phosphoreszierendes Pigment und
(B) ein transparentes organisches oder anorganisches Pigment, wobei das anorganische phosphoreszierende Pigment eine Matrix der Formel MAl₂O₄, worin M für Calcium, Strontium oder Barium steht, oder eine Matrix der Formel (M'xM''y)Al₂O₄, worin x + y = 1 und M' und M", die verschieden sind, jeweils für ein unter Calcium, Barium, Strontium und Magnesium ausgewähltes Metall stehen, umfasst.

2. Überzug oder Folienmaterial, umfassend
(a) eine Schicht, die eine Pigmentzusammensetzung nach Anspruch 1 umfasst, wobei die Pigmentzusammensetzung in mindestens einem Teil der Schicht vorliegt; oder
(a) eine Schicht, die ein anorganisches phosphoreszierendes Pigment umfasst, wobei das anorganische phosphoreszierende Pigment in mindestens einem Teil der Schicht vorliegt, und
(b) eine Schicht, die ein transparentes organisches oder anorganisches Pigment umfasst, wobei das anorganische phosphoreszierende Pigment eine Matrix der Formel MAl₂O₄, worin M für Calcium, Strontium oder Barium steht, oder eine Matrix der Formel (M'xM''y)Al₂O₄, worin x + y = 1 und M' und M'', die verschieden sind, jeweils für ein unter Calcium, Barium, Strontium und Magnesium ausgewähltes Metall stehen, umfasst.

3. Sicherheitselement für ein Wert-, Rechts- oder Ausweisdokument, für ein Sicherheitsetikett oder eine Markenware, umfassend ein Substrat, das in oder auf seiner Oberfläche Zeichen oder andere sichtbare Merkmale enthalten kann, und auf mindestens einem Teil der Substratoberfläche eine Pigmentzusammensetzung nach Anspruch 1 oder
(a) eine Überzugsschicht, die teilweise oder vollständig ein anorganisches phosphoreszierendes Pigment umfasst, und
(b) eine Überzugsschicht, die ein transparentes organisches oder anorganisches Pigment umfasst, wobei das anorganische phosphoreszierende Pigment eine Matrix der Formel MAl₂O₄, worin M für Calcium, Strontium oder Barium steht, oder eine Matrix der Formel (M'xM''y)Al₂O₄, worin x + y = 1 und M' und M'', die verschieden sind, jeweils für ein unter Calcium, Barium, Strontium und Magnesium ausgewähltes Metall stehen, umfasst.

4. Pigmentzusammensetzung, Überzug, Folienmaterial oder Sicherheitselement nach Anspruch 1, 2 oder 3, wobei das anorganische phosphoreszierende Pigment unter MgAl₂O₄ : Ce³⁺, CaAl₂O₉ : Mn²⁺, Ce³⁺, CaAl₂O₄ : Eu²⁺ , Nd³⁺, Ca_{1-x-y}Al₂O₄ : Euₓ²⁺, Nd_{y}³⁺ (0 ≤ x ≤ 0,045; 0 ≤ y ≤ 0,0037), opt.: x = 0,00125; y - 0,0025, CaAl₂O₄ : Eu²⁺, Nd³⁺, CaAl₂O₄ : Eu²⁺,Nd³⁺, La³⁺, CaAl₄O₇ : Eu²⁺, Nd³⁺, Ca₁₋ₓSrₓAl₂O₄ : Eu²⁺, Nd³⁺, La³⁺, SrAl₂O₄ : Ce³⁺, SrAl₂O₄ : Eu²⁺, SrAl₂O₄ : Eu²⁺, B³⁺, SrAl₂O₄: Eu²⁺,Nd³⁺, SrAl₂O₄ : Eu²⁺, Dy³⁺, MAl₂O₄ : Eu²⁺, Dy³⁺ M: Sr, (Ba/Ca) oder M: Sr,Ba,Ca, Sr₄Al₁₄O₂₅ : Eu²⁺, RE³⁺ RE: Dy/Pr/Ho/Nd und/oder Sm, Sr₄Al₁₄O₂₅ : Cr³⁺ ,Eu²⁺, Dy³⁺ und Sr₅Al₂O₇S : Eu²⁺ ausgewählt ist.

5. Pigmentzusammensetzung, Überzug, Filmmaterial oder Sicherheitselement nach Anspruch 1, 2 oder 3, wobei es sich bei dem transparenten Farbmittel um ein anorganisches Pigment, wie transparentes Eisenoxidgelb [C.I. Pigment Yellow 42:77 492], transparentes Eisenoxidrot [C.I. Pigment Red 101: 77 491], transparentes Cobaltblau [C.I. Pigment Blue 28: 77 346], transparentes Cobaltgrün [C.I. Pigment Green 19:77 335] und transparentes Chromoxidgrün, handelt.

6. Pigmentzusammensetzung, Überzug, Filmmaterial oder Sicherheitselement nach Anspruch 1, 2 oder 3, wobei es sich bei dem transparenten Farbmittel um ein organisches Pigment, wie ein transparentes Chinacridon in seinen Magenta- und Rotfarben, ein transparentes Gelbpigment, wie ein Isoindolinon oder eine gelbe feste Lösung von Chinacridon/Chinacridonchinon, ein transparentes Kupferphthalocyaninblau und ein halogeniertes Phthalocyaningrün oder ein hochgesättigtes transparentes Diketopyrrolopyrrol- oder Dioxazinpigment; insbesondere ein transparentes Chinacridonpigment oder ein transparentes Diketopyrrolopyrrolpigment, handelt.

7. Pigmentzusammensetzung, Überzug, Filmmaterial oder Sicherheitselement nach Anspruch 1, 2 oder 3, wobei es sich bei dem transparenten Farbmittel um Chromoxidgrün oder ein Diketopyrrolopyrrolpigment handelt und es sich bei dem anorganischen phosphoreszierenden Pigment um SrAl₂O₄ : Eu²⁺-Leuchtstoff mit grüner Phosphoreszenz und einer mittleren Teilchengröße von etwa 3 µm handelt.

8. Verfahren zur Herstellung eines Sicherheitselements nach Anspruch 3, bei dem man
a) ein Substrat mit einer Oberfläche, die Zeichen oder andere sichtbare Merkmale enthalten kann, bereitstellt;
b) auf mindestens einen Teil des Substrats einen Überzug, der ein anorganisches phosphoreszierendes Pigment, ein transparentes organisches oder anorganisches Pigment und ein härtbares transparentes Bindemittel umfasst, aufbringt und
c) die Überzugsschicht härtet; oder
a) ein Substrat mit einer Oberfläche, die Zeichen oder andere sichtbare Merkmale enthalten kann, bereitstellt;
b) auf mindestens einen Teil des Substrats einen Überzug, der ein anorganisches phosphoreszierendes Pigment und ein härtbares transparentes Bindemittel umfasst, aufbringt,
b1) gegebenenfalls die Überzugsschicht (b) härtet; b2) auf die Überzugsschicht (b) einen Überzug, der ein transparentes organisches oder anorganisches Pigment und ein härtbares transparentes Bindemittel umfasst, aufbringt und
c) die Überzugsschicht(en) härtet, wobei das anorganische phosphoreszierende Pigment eine Matrix der Formel MAl₂O₄, worin M für Calcium, Strontium oder Barium steht, oder eine Matrix der Formel (M'xM''y)Al₂O₄, worin x + y = 1 und M' und M'', die verschieden sind, jeweils für ein unter Calcium, Barium, Strontium und Magnesium ausgewähltes Metall stehen, umfasst.

9. Phosphoreszierendes Bild, gebildet durch Aufdrucken eines anorganischen phosphoreszierenden Pigments und eines transparenten organischen oder anorganischen Pigments, umfassend eine ein phosphoreszierendes Bild bildende Schicht auf dem Substrat oder eine ein phosphoreszierendes Bild bildende Schicht und eine farbige transparente Schicht auf dem Substrat, wobei
die ein phosphoreszierendes Bild bildende Schicht ein anorganisches phosphoreszierendes Pigment und ein transparentes organisches oder anorganisches Pigment umfasst oder die ein phosphoreszierendes Bild bildende Schicht ein anorganisches phosphoreszierendes Pigment umfasst und die farbige transparente Schicht ein transparentes organisches oder anorganisches Pigment umfasst, wobei das anorganische phosphoreszierende Pigment eine Matrix der Formel MAl₂O₄, worin M für Calcium, Strontium oder Barium steht, oder eine Matrix der Formel (M'xM''y)Al₂O₄, worin x + y = 1 und M' und M'', die verschieden sind, jeweils für ein unter Calcium, Barium, Strontium und Magnesium ausgewähltes Metall stehen, umfasst.

10. Wert-, Rechts- oder Ausweisdokument, Sicherheitsetikett oder Markenware, umfassend ein Sicherheitselement nach Anspruch 3.

11. Verwendung eines Sicherheitselements nach Anspruch 3 zur Verhinderung der Fälschung oder Reproduktion eines Wert-, Rechts- oder Ausweisdokuments, eines Sicherheitsetiketts oder einer Markenware.

12. Verfahren zur Prüfung eines Wert-, Rechts- oder Ausweisobjekts, eines Sicherheitsetiketts oder einer Markenware nach Anspruch 10, bei dem man überprüft, ob bei Bestrahlung mit Licht eine Farbänderung vorliegt.

## Revendications

1. Composition de pigments, comprenant
(A) un pigment phosphorescent inorganique, et
(B) un pigment transparent organique ou inorganique, dans laquelle le pigment phosphorescent inorganique comprend une matrice de formule MAl₂O₄ dans laquelle M représente le calcium, le strontium ou le baryum, ou une matrice de formule (M'ₓM"_{y})Al₂O₄ dans laquelle x+y = 1 et M' et M", qui sont différents, représentent chacun un métal choisi parmi le calcium, le baryum, le strontium et le magnésium.

2. Revêtement ou matériau de film, comprenant
(a) une couche comprenant une composition de pigments selon la revendication 1, la composition de pigments étant présente dans au moins une partie de ladite couche ; ou
(a) une couche comprenant un pigment phosphorescent inorganique, le pigment phosphorescent inorganique étant présent dans au moins une partie de ladite couche ; et
(b) une couche comprenant un pigment transparent organique ou inorganique,
dans lesquels le pigment phosphorescent inorganique comprend une matrice de formule MAl₂O₄ dans laquelle M représente le calcium, le strontium ou le baryum, ou une matrice de formule (M' ₓM"_{y}) Al₂O₄ dans laquelle x+y = 1 et M' et M", qui sont différents, représentent chacun un métal choisi parmi le calcium, le baryum, le strontium et le magnésium.

3. Élément de sécurité pour un document de valseur, de droits, d'identité, pour une étiquette de sécurité ou un article de marque, comprenant un substrat qui peut contenir des indices ou d'autres caractéristiques visibles dans ou sur sa surface, et sur au moins une partie de ladite surface du substrat, comprenant une composition de pigments selon la revendication 1 ; ou (a) une couche de revêtement comprenant partiellement ou totalement un pigment phosphorescent inorganique, et (b) une couche de revêtement comprenant un pigment transparent organique ou inorganique,
dans lequel le pigment phosphorescent inorganique comprend une matrice de formule MAl₂O₄ dans laquelle M représente le calcium, le strontium ou le baryum, ou une matrice de formule (M'ₓM"_{y})Al₂O₄ dans laquelle x+y = 1 et M' et M", qui sont différents, représentent chacun un métal choisi parmi le calcium, le baryum, le strontium et le magnésium.

4. Composition de pigments, revêtement, matériau de film ou élément de sécurité selon la revendication 1, 2 ou 3, dans lesquels le pigment phosphorescent inorganique est choisi parmi MgAl₂O₄ : Ce³⁺, CaAl₂O₄ : Mn²⁺, Ce³⁺, CaAl₂O₄ : Eu²⁺, Nd³⁺, Ca_{1-x-y}Al₂O₄ : Euₓ²⁺, Nd_{y}³⁺ ( 0 ≤ x ≤ 0,045 ; 0 ≤y ≤ 0,0037 ; éventuellement x = 0,00125 et y = 0,0025), CaAl₂O₄ : Eu²⁺, Nd³⁺, La³⁺, CaAl₄O₇:Eu²⁺, Nd³⁺, Ca₁₋ₓSrₓAl₂O₄ : Eu²⁺, Nd³⁺, La³⁺, SrAl₂O₄ : Ce³⁺, SrAl₂O₄: Eu²⁺, SrAl₂O₄: Eu²⁺ , B²⁺, SrAl₂O₄ : Eu²⁺, Nd³⁺, SrAl₂O₄:Eu²⁺, Dy³⁺, MAl₂O₄: Eu²⁺, Dy³⁺ (M : Sr, (Ba/Ca) ou M : Sr,Ba,Ca), Sr₄Al₁₄O₂₅: Eu²⁺, RE³⁺ (RE : Dy/Pr/Ho/Nd et/ou Sm), Sr₄Al₁₄O₂₅:Cr³⁺, Eu²⁺, Dy³⁺, et Sr₅Al₂O₇S : Eu²⁺.

5. Composition de pigments, revêtement, matériau de film ou élément de sécurité selon la revendication 1, 2 ou 3, dans lesquels le colorant transparent est un pigment inorganique tel que l'oxyde de fer jaune transparent (pigment jaune C.I. 42:77 492), l'oxyde de fer rouge transparent (pigment rouge C.I. 101:77 491), le bleu de cobalt transparent (pigment bleu C.I. 28:77 346), le vert de cobalt transparent (pigment vert C.I. 19:77 335) ou le vert d'oxyde de chrome transparent.

6. Composition de pigments, revêtement, matériau de film ou élément de sécurité selon la revendication 1, 2 ou 3, dans lesquels le colorant transparent est un pigment organique tel que la quinacridone transparente dans ses couleurs magenta et rouge, un pigment jaune transparent comme une isoindolinone ou une solution solide quinacridone/quinacridonequinone jaune, un bleu de phthalocyanine de cuivre transparent ou un vert de phtalocyanine de cuivre halogénée, ou un pigment de dicétopyrrolopyrrole ou de dioxazine transparent fortement saturé ; en particulier un pigment de quinacridone transparent ou un pigment de dicétopyrrolopyrrole transparent.

7. Composition de pigments, revêtement, matériau de film ou élément de sécurité selon la revendication 1, 2 ou 3, dans lesquels le colorant transparent est le vert d'oxyde de chrome ou un pigment de dicétopyrrolopyrrole, et le pigment phosphorescent inorganique est une substance luminescente SrAl₂O₄: Eu²⁺ ayant une phosphorescence verte et une taille moyenne de particules d'environ 3 µm.

8. Procédé de fabrication d'un élément de sécurité selon la revendication 3, comprenant les étapes consistant à
a) se procurer un substrat ayant une surface, laquelle surface peut contenir des indices ou d'autres caractéristiques visibles ;
b) appliquer au-dessus d'au moins une partie de ladite surface du substrat un revêtement comprenant un pigment phosphorescent inorganique, un pigment transparent organique ou inorganique et un liant transparent durcissable, et
c) durcir ladite couche de revêtement ; ou
a) se procurer un substrat ayant une surface, laquelle surface peut contenir des indices ou d'autres caractéristiques visibles ;
b) appliquer au-dessus d'au moins une partie de ladite surface du substrat un revêtement comprenant un pigment phosphorescent inorganique et un liant transparent durcissable ;
b1) éventuellement durcir ladite couche de revêtement (b) ;
b2) appliquer au-dessus de ladite couche de revêtement (b) un revêtement comprenant un pigment transparent organique ou inorganique et un liant transparent durcissable ; et
c) durcir ladite/lesdites couche(s) de revêtement, dans lequel le pigment phosphorescent inorganique comprend une matrice de formule MAl₂O₄ dans laquelle M représente le calcium, le strontium ou le baryum, ou une matrice de formule (M'ₓM"_{y})Al₂O₄ dans laquelle x+y = 1 et M' et M", qui sont différents, représentent chacun un métal choisi parmi le calcium, le baryum, le strontium et le magnésium.

9. Image phosphorescente formée en imprimant un pigment phosphorescent inorganique et un pigment transparent organique ou inorganique, comprenant une couche formant une image phosphorescente sur ledit substrat, ou une couche formant une image phosphorescente et une couche colorée transparente sur ledit substrat, dans laquelle
la couche formant une image phosphorescente comprend un pigment phosphorescent inorganique et un pigment transparent organique ou inorganique, ou dans laquelle
la couche formant une image phosphorescente comprend un pigment phosphorescent inorganique, et la couche colorée transparente comprend un pigment transparent organique ou inorganique,
dans laquelle le pigment phosphorescent inorganique comprend une matrice de formule MAl₂O₄ dans laquelle M représente le calcium, le strontium ou le baryum, ou une matrice de formule (M'ₓM"_{y})Al₂O₄ dans laquelle x+y = 1 et M' et M", qui sont différents, représentent chacun un métal choisi parmi le calcium, le baryum, le strontium et le magnésium.

10. Document de valeur, de droits, d'identité, étiquette de sécurité ou article de marque, comprenant un élément de sécurité selon la revendication 3.

11. Utilisation d'un élément de sécurité selon la revendication 3 pour la prévention de la contrefaçon ou de la reproduction, sur un document de valeur, de droits, d'identité, une étiquette de sécurité ou un article de marque.

12. Procédé pour tester un objet de valeur, de droits, d'identité, une étiquette de sécurité ou un article de marque selon la revendication 10, comprenant l'étape consistant à vérifier si un changement de couleur est présent lors d'une irradiation avec de la lumière.
